# NEUE EUROPÄISCHE PATENTSCHRIFT

(11) **EP 2 062 205 B2**
(45) Veröffentlichungstag und Bekanntmachung des Hinweises auf die Entscheidung über den Einspruch: **12.02.2020**
(45) Hinweis auf die Patenterteilung: 05.06.2013
(21) Anmeldenummer: 07817493.5
(22) Anmeldetag: 07.09.2007
(51) Int. Cl.: G06Q 10/00, F01D 5/00

(54) **WARTUNGSPLANUNGSVERFAHREN FÜR GASTURBINENFLUGTRIEBWERKE**
MAINTENANCE PLANNING METHOD FOR AIRCRAFT GAS TURBINE ENGINES
PROCÉDÉ DE PLANIFICATION DE LA MAINTENANCE POUR TURBINES A GAZ D'AERONEF

(30) Priorität: 14.09.2006 DE 102006043292
(43) Veröffentlichungstag der Anmeldung: 27.05.2009
(73) Patentinhaber: MTU Aero Engines AG, 80995 München (DE)
(72) Erfinder: HANREICH, Klaus, 30900 Wedemark (DE); BURMEISTER, Rolf, 31637 Rodewald (DE); PETRICK, Torsten, 30900 Wedemark (DE); EXLER, Ferdinand, 31552 Apelern (DE)
(74) Vertreter: Hofstetter, Schurack & Partner
(86) Internationale Anmeldenummer: PCT/DE2007/001620
(87) Internationale Veröffentlichungsnummer: WO 2008/031413

(56) Entgegenhaltungen:
- EP-A- 1 178 417
- EP-A- 1 236 864
- EP-A- 1 267 310
- EP-A- 1 659 527
- EP-A- 1 691 326
- EP-A1- 1 659 527
- JP-A- 6 257 412
- US-A1- 2001 032 103
- US-A1- 2002 188 494
- US-A1- 2003 187 530

## Beschreibung

Die Erfindung betrifft ein Wartungsplanungsverfahren für Gasturbinenflugtriebwerke.

Die US 2003/0187530 A1 offenbart ein Verfahren zur Planung der Rotation von Bauteilen wie beispielsweise Beschaufelungen von Gasturbinen thermischer Kraftwerke zwischen verschiedenen Rotoren, beispielsweise den Einsatz einer Beschaufelung in einer Betriebsperiode eines Rotors und anschließend in einer Betriebsperiode eines anderen Rotors, wobei der Austausch während Stillstandszeiten beider Rotoren geplant wird.

Die EP 1 178 417 A2 schlägt vor, den optimalen Zeitpunkt einer Inspektion auf Basis historischer Daten derselben Kraftwerke abzuschätzen. Die EP 1 267 310 A2 schlägt eine automatisierte Anpassung sogenannter "Service Bulletins" vor. Die US 2002/0188494 A1 betrifft ebenfalls Service Bulletins und schlägt Modifikationsmöglichkeiten für diese vor.

Zur Wartung von Gasturbinenflugtriebwerken wird nach der Praxis so vorgegangen, dass Wartungsintervalle strikt nach Betriebsstunden bzw. Flugstunden und/oder der Anzahl der Starts und/oder der Anzahl der Landungen, welche mit einem Gasturbinenflugtriebwerk absolviert wurden, bestimmt werden. Ein zu wartendes Gasturbinenflugtriebwerk wird nach der Praxis inspiziert, wobei alleine auf Basis dieser Inspektion des Gasturbinenflugtriebwerks Wartungsarbeiten festgelegt werden. Diese aus der Praxis bekannte Vorgehensweise bei der Wartung von Gasturbinenflugtriebwerken verfügt über den Nachteil, dass sich auszuführenden Wartungsarbeiten vor Inspektion eines Crasturbinenflugtriebwerks nicht einplanen lassen. Hierdurch wird der Reduzierung von Durchlaufzeiten bei der Wartung von Gasturbinenflugtriebwerken eine Grenze gesetzt.

Hiervon ausgehend liegt der vorliegenden Erfindung das Problem zu Grunde, ein effizienteres und variableres Wartungsplanungsverfahren für Gasturbinenflugtriebwerke zu schaffen.

Dieses Problem wird durch ein Wartungsplanungsverfahren gemäß Anspruch 1 gelöst Das erfindungsgemäße Wartungsplanungsverfahren umfasst zumindest die folgenden Schritte: a) aus bereits durchgeführten Wartungen von Gasturbinenflugtriebwerken gewonnene Daten werden in Form von Fallenscheidungen aufweisenden Entscheidungsbäumen in einer Datenbank strukturiert abgelegt; b) zur Wartungsvorplanung eines neu zu wartenden Gasturbinenflugbriebwerks werden auf Basis der Datenbank auszuführende Wartungsarbeiten in Art und Reihenfolge zusammengestellt; c) zur Wartungsendplanung wird das neu zu wartende Gastufbinenflügtriebwerk inspiziert und auf Basis der Inspektion wird die in der Wartungsvorplanung festgelegte Art und/orler Reihenfolge der auszuführenden Wartungsarbeiten angepasst und/oder ergänzt.

Im Sinne des erfindungsgemäßen Verfahrens werden Erfahrungswerte aus vergangenen Wartungen verwendet, um eine anstehende Wartung eines Gasturbinenflugtriebwerks vorzuplanen. Die Inspektion des Gasturbinenflugtriebwerks erfolgt im Anschluss an die Wartungsvorplanung, wobei auf Basis der Inspektion die Wartungsvorplanung zur Gewinnung der Wartungsendplanung angepasst und/oder ergänzt wird.

Mit dem erfindungsgemäßen Verfahren ist es demnach möglich, eine technische Abwicklungsplanung der Wartung, eine Ressourcenplanung von Maschinen und Mitarbeitern, die zur Wartung benötigt werden, sowie die Abwicklungsterminierung im Vorfeld der Inspektion vorzuplanen, um so letxtendlich die Durchlaufzeiten für eine Wartung eines Gasturbinenflugtriebwerks zu reduzieren.

Bevorzugte Weiterbildungen der Erfindung ergeben sich aus den Unteransprüchen und der nachfolgenden Beschreibung.

Die hier vorliegende Erfindung betrifft ein Verfahren zur Planung der Wartung für Gasturbinenflugtriebwerke, wobei mit Hilfe des erfindungsgemäßen Wartungsplanungsverfahrens die zur Wartung benötigte Durchlaufzeit reduziert werden kann.

Im Sinne des erfindungsgemäßen Verfahrens werden aus bereits durchgeführten Wartungen von Gasturbinenflugtriebwerken gewonnene Daten in einer Datenbank strukturiert abgelegt, wobei diese Daten insbesondere ausgeführte Wartungsarbeiten in Korrelation zu Betriebsbelastungen eines gewarteten Gasturbinenflugtriebwerks setzen.

Insbesondere werden Wartungsarbeiten wie Bauteilreinigungen und/oder Bauteilentschichtungen und/oder Bauteilbeschichtungen und/oder Bauteilemeuerungen in Korrelation zu Betriebsbelastungen wie Betriebsstundenanzahl bzw. Flugstundenanzahl und/oder der Anzahl der Starts und/oder der Anzahl der Landungen, gesetzt. Diese Korrelationen werden dabei in der Datenbank in Form von Entscheidungsbäumen, die Fallentscheidungen enthalten, strukturiert abgelegt.

Zur Wartungsvorplanung eines neu zu wartenden Gasturbinenflugtriebswerks werden auf Basis der Datenbank auszuführende Wartungsarbeiten in Art und Reihenfolge zusammengestellt. Auf Basis der Datenbank kann des Weiteren ein Wartungszeitpunkt für das neu zu wartende Gasturbinenflugtriebwerk festgelegt werden, um so den optimalen Wartungszeitpunkt auf Basis der Betriebsbelastungen eines zu wartenden Gasturbinenflugtriebwerks zu bestimmen.

Die Wartungsvorplanung erfolgt alleine auf Basis der in der Datenbank strukturiert abgelegten Erfahrungswerte aus vorgegangenen Triebwerkswartungen und ohne Inspektion des zu wartenden Gasturbinenflugtriebwerks.

Im Anschluss an die Wartungsvorplanung auf Basis der Datenbank wird das zu wartende Gasturbinenflugtriebwerk inspiziert, wobei auf Basis der Inspektion die in der Wartungsvorplanung festgelegte Art und/oder Reihenfolge der auszuführenden Wartungsarbeiten angepasst und/oder ergänzt wird, um so die Wartungsendplanung durchzuführen. Auf Basis der Inspektion wird demnach im Sinne der hier vorliegenden Erfindung eine vorab erstellte Wartungsvorplanung lediglich modifiziert.

Durch die erfindungsgemäße Verwendung von Erfahrungswerten aus vorangegangenen Triebwerkswartungen kann für ein neu zu wartendes Gasturbinenflugtriebwerk der erforderliche Wartungsumfang im Sinne einer Wartungsvorplanung vorgeplant werden. Diese Wartungsvorplanung erfolgt ohne die vorherige Inspektion des Gasturbinenflugtriebwerks. Die Begutachtung bzw. Inspektion des Gasturbinenflugtriebwerks erfolgt nach der Wartungsvorplanung als separater Schritt und führt lediglich zur Anpassung und/oder Ergänzung der in der Wartungsvorplanung festgelegten Wartunpsarbeiten. Hierdurch können Wertungsarbeiten frühzeitig prognostiziert und in die technische Abwicklungsplanung, Ressourcenplanung und Abwicklungsterminierung einbezogen werden. Hierdurch können Durchlaufzeiten bei der Wartung von Gasturbinenflugtriebwerken deutlich reduziert werden.

Die Erfahrungswerte aus vergangenen Wartungsvorgängen werden als technische Zusammenhänge in Entscheidungsbäumen strukturiert abgelegt, wobei beliebige Kombinationen von möglichen technischen Entscheidungen abgebildet werden können. Die Entscheidungsbäume enthalten Fallentscheidungen, um die Erfahrungswerte bzw. Daten aus bereits durchgeführten Wartungen strukturiert abzulegen und bei neu auszuführenden Wartungen zur Wartungsvorplanung heranzuziehen.

## Patentansprüche

1. Wartungsplanungsverfahren für Gasturbinenflugtriebwerke mit zumindest den folgenden Schritten:
a) aus bereits durchgeführten Wartungen von Gasturbinenflugtriebwerken gewonnene Daten werden in Form von Fallenscheidungen aufweisenden Entscheidungsbäumen in einer Datenbank strukturiert abgelegt;
b) zur Wartungsvorplanung eines neu zu wartenden Gasturbinenflugtriebwerks werden auf Basis der Datenbank auszuführende Wartungsarbeiten in Art und Reihenfolge zusammengestellt;
c) zur Wartungsendplanung wird das neu zu wartenden Gasturbinenflugtriebwerk inspiziert und auf Basis der Inspektion wird die in der Wartungsvorplanung festgelegte Art und/oder Reihenfolge der auszuführenden Wartungsarbeiten angepasst und/oder ergänzt.

2. Wartungsplanungsverfahren für Gasturbinenflugtriebwerke nach Anspruch 1, **dadurch gekennzeichnet, dass** in Schritt a) die aus bereits durchgeführten Wartungen von Gasturbinenflugtriebwerken gewonnenen, in einer Datenbank strukturiert abgelegten Daten ausgeführte Wartungsarbeiten in Korrelation zu Betriebsbelastungen eines gewarteten Gasturbinenflugtriebwerks setzen

3. Wartungsplanungsverfahren nach einem der vorhergehenden Ansprüche,
**dadurch gekennzeichnet, dass** auf Basis der Datenbank ein Wartungszeitpunkt für das neu zu wartende Gasturbinenflugtriebwerk festgelegt und die Art und Reihenfolge der auszuführenden Wartungsarbeiten für die Wartungsvorplanung auf Basis der Datenbank zusammengestellt wird.

4. Wartungsplanungsverfahren nach einem der vorhergehenden Ansprüche, **dadurch gekennzeichnet, dass** die aus bereits durchgeführten Wartungen gewonnen Daten in Form von Fallentscheidungen aufweisenden Entscheidungsbäumen strukturiert abgelegt werden, um so Wartungsarbeiten wie Bauteilreinigungen und/oder Bauteilentschichtungen und/oder Bauteilbeschichtungen und/oder Bauteilerneuerungen in Korrelation zu Betriebsbelastungen wie Betriebstundenzahl und/oder Anzahl der Starts und/oder Anzahl der Landungen zu setzen.

## Claims

1. A maintenance planning method for gas turbine aircraft engines, having at least the following steps:
a) data obtained from maintenance of gas turbine aircraft engines that has already been performed are stored in the form of decision trees comprising case decisions in a structured manner in a database;
b) in order to pre-plan the maintenance of a gas turbine aircraft engine that is to be newly maintained, maintenance work that is to be carried out on the basis of the database is arranged in terms of type and sequence;
c) for final maintenance planning, the gas turbine aircraft engine that is to be newly maintained is inspected, and on the basis of the inspection the type and/or sequence of the maintenance work to be carried out, established in the maintenance pre-planning, are/is adapted and/or supplemented.

2. A maintenance planning method for gas turbine aircraft engines according to claim 1, **characterized in that** in step a) the data obtained from maintenance of gas turbine aircraft engines already performed and stored in a structured manner in a data base correlate maintenance work that has been carried out with operating loads of a maintained gas turbine aircraft engine.

3. A maintenance planning method according to one of the preceding claims,
**characterized in that**
on the basis of the database a maintenance time for the gas turbine aircraft engine that is to be newly maintained is established, and the type and sequence of the maintenance work to be carried out is arranged for the maintenance pre-planning on the basis of the database.

4. A maintenance planning method according to any one of the preceding claims,
**characterized in that**
the data obtained from maintenance that has already been performed are stored in a structured manner in the form of decision trees having case decisions in order thus to correlate maintenance work, such as component cleaning and/or component coating-removal and/or component coating and/or component renewal, with operating loads, such as the number of hours of operation and/or the number of take-offs and/or the number of landings.

## Revendications

1. Procédé de planification de maintenances pour des turbines à gaz d'aéronef présentant au moins les étapes suivantes :
a) des données obtenues à partir des maintenances déjà réalisées de turbines à gaz d'aéronef sont enregistrées de manière structurée dans une base de données sous la forme d'arbres de décision présentant des décisions *in specie;*
b) des travaux de maintenance à réaliser basés sur la base de données sont regroupés par type et ordre pour une préplanification de la maintenance d'une turbine à gaz d'aéronef faisant l'objet d'une nouvelle maintenance;
c) la turbine à gaz d'aéronef faisant l'objet d'une nouvelle maintenance est inspectée pour une planification finale de la maintenance et le type et/ou l'ordre fixé dans la préplanification de la maintenance des travaux de maintenance à réaliser est adapté et/ou complété sur la base de l'inspection.

2. Procédé de planification de la maintenance pour des turbines à gaz d'aéronef selon la revendication 1, **caractérisé en ce qu'**à l'étape a) les données obtenues à partir des maintenances déjà réalisées des turbines à gaz d'aéronef, enregistrées de manière structurée dans une base de données mettent des travaux de maintenance réalisés en corrélation avec des charges de service d'une turbine à gaz d'aéronef ayant fait l'objet d'une maintenance.

3. Procédé de planification de la maintenance selon l'une quelconque des revendications précédentes, **caractérisé en ce qu'**un moment de maintenance pour la turbine à gaz d'aéronef faisant l'objet d'une nouvelle maintenance est fixé en se basant sur la base de données et le type et l'ordre des travaux de maintenance à réaliser pour la préplanification de la maintenance sont regroupés en se basant sur la base de données.

4. Procédé de planification de la maintenance selon l'une quelconque des revendications précédentes, **caractérisé en ce que** les données obtenues à partir des maintenances déjà réalisées sont enregistrées de manière structurée sous la forme d'arbres de décision présentant des décisions *in specie* afin de mettre en corrélation des travaux de maintenance tels que des nettoyages de composant et/ou des enlèvements de couche de composant et/ou des revêtements de composant et/ou des renouvellements de composant, avec des charges de service telles qu'un nombre d'heures de service et/ou un nombre de démarrages et/ou un nombre d'atterrissages.
